# EUROPÄISCHE PATENTSCHRIFT

(11) **EP 1 961 534 B1**
(45) Veröffentlichungstag und Bekanntmachung des Hinweises auf die Patenterteilung: **07.04.2010**
(21) Anmeldenummer: 07003881.5
(22) Anmeldetag: 26.02.2007
(51) Int. Cl.: B27D 5/00, B29C 63/00

(54) **Verfahren zum Anhaften von Kantenmaterial an Leichtbauplatten und durch das Verfahren hergestellte Leichbauplatte**
Method for sticking edging material to lightweight building boards and lightweight building boards manufactured by this method
Procédé de collage de matériaux de rebord sur des panneaux de construction légers et panneaux de construction légers fabriquée à l'aide de ce procédé

(43) Veröffentlichungstag der Anmeldung: 27.08.2008
(73) Patentinhaber: Homag Holzbearbeitungssysteme AG, 72296 Schopfloch (DE)
(72) Erfinder: Gauss, Achim, 72280 Dornstetten/Hallwangen (DE)
(74) Vertreter: HOFFMANN EITLE

(56) Entgegenhaltungen:
- EP-A- 1 186 398
- EP-A- 1 640 128
- EP-A1- 0 580 067
- EP-A1- 1 563 970
- DE-A- 3 328 354

## Beschreibung

### Technisches Gebiet

Die Erfindung betrifft ein Verfahren zum Anhaften von Kantenmaterial an Leichtbauplatten, die zwei dünnwandige Decklagen und eine zwischen den Decklagen angeordnete Kernlage aus leichtem Füllmaterial aufweisen, nach dem Oberbegriff von Anspruch 1.

### Stand der Technik

Leichtbauplatten der hier zur Rede stehenden Art finden verbreitet Anwendung, beispielsweise zur Herstellung von Türen, zunehmend aber auch zur Herstellung von Tischplatten oder anderen Möbelteilen.

Ein Verfahren der eingangs genannten Art ist beispielsweise in der EP-A-1640128 offenbart. Bei diesem Verfahren wird zunächst eine Leichtbauplatte formatiert (in die gewünschte Rohform gebracht). Anschließend wird im Bereich der Schmalseite der Leichtbauplatte eine Ausnehmung eingefräst, und zwar sowohl in die Decklagen als auch in die Kernlage. Abschließend wird eine Stützkante in die Ausnehmung eingeleimt, die mit einer Dekorkante versehen ist oder noch versehen wird. Sowohl die Stützkante als auch die Dekorkante bestehen häufig aus einem Kunststoffmaterial. Dabei hat sich gezeigt, dass die meist dicker ausgeführte Stützkante im Bereich von Ecken oder Krümmungen der Schmalfläche der Leichtbauplatte schwierig umgelenkt werden kann, so dass die herstellbaren Plattengeometrien begrenzt sind bzw. mit mehreren separaten Stützkantenabschnitten gearbeitet werden muss, was zu einem aufwändigen Verfahrensablauf führt.

Die DE 33 28 354 A1 offenbart eine Arbeitsplatte, bei der die Außenwand, welche an der nach außen hin glatten Kantenabdeckung des Plattenkerns angeordnet ist, aus Papier oder Pappe hergestellt ist.

Die EP 0 580 067 A1 beschreibt eine Spanplatte mit Deckenlagen, bei der die Zwischenlage mit großen Spänen gefüllt ist.

Die EP 1 186 398 A1 beschreibt eine Wabenkern-Verbundplatte, bei welcher eine Dekorkante, welche auch als Stangenware ausgeführt sein kann, auf die schmalen Seitenflächen aufgeklebt wird.

### Darstellung der Erfindung

Es ist daher Aufgabe der Erfindung, ein gattungsgemäßes Verfahren bereitzustellen, das bei einfachem Verfahrensablauf eine hohe Flexibilität der herstellbaren Plattengeometrien ermöglicht.

Diese Aufgabe wird erfindungsgemäß durch ein Verfahren nach Anspruch 1 gelöst. Besonders bevorzugte Weiterbildungen der Erfindung sind in den abhängigen Ansprüchen angegeben.

Der Erfindung liegt der Gedanke zugrunde, für die Stützkante ein Material einzusetzen, das sehr große Umlenkwinkel bis hin zu Knicken ermöglicht, ohne die Stützeigenschaften der Stützkante übermäßig zu beeinträchtigen. Zu diesem Zweck ist erfindungsgemäß vorgesehen, dass bei einem gattungsgemäßen Verfahren zumindest die Stützkante ein Kartonmaterial aufweist. Wie die Erfinder festgestellt haben, eignet sich derartiges Material besonders gut für die hier zur Rede stehende Anwendung, da der Faserverbund des Kartonmaterials extrem hohe Umlenkwinkel oder sogar ein vollständiges Knicken zulässt, während das Material beispielsweise senkrecht zur Umlenk-/Knickrichtung seine Steifigkeit weitgehend beibehält.

Eine mögliche Erklärung hierfür kann darin gesehen werden, obgleich die vorliegende Erfindung nicht hierauf beschränkt ist, dass bei starker Verformung in dem erfindungsgemäß verwendeten Kartonmaterial kein Bruch auftritt, sondern lediglich der Faserverbund teilweise aufgehoben wird, so dass die Steifigkeit des Materials senkrecht zur Umlenk/Knickrichtung verhältnismäßig wenig beeinträchtigt wird und sich geringe Rückstellkräfte ergeben.

Nicht zuletzt ist das erfindungsgemäß verwendete Kartonmaterial kostengünstig verfügbar und leicht zu verarbeiten.

Unter Kartonmaterial ist im Rahmen der vorliegenden Erfindung ein Material zu verstehen, das Fasern und Zusatzstoffe enthält, die gemeinsam verarbeitet wurden.

Die Stützkante kann im Rahmen der vorliegenden Erfindung prinzipiell auf beliebige Weise bereitgestellt werden. Im Hinblick auf eine flexible Fertigung und einen wirtschaftlichen Umgang mit dem Kantenmaterial hat es sich jedoch als vorteilhaft erwiesen, dass gemäß einer Weiterbildung der Erfindung zumindest die Stützkante mit einer benötigten Breite von einer Materialbahn abgetrennt wird.

Dabei kann die Materialbahn beispielsweise flächig ausliegen, und die jeweilige Stützkante kann mit einem geeigneten Werkzeug wie beispielsweise einem verfahrbaren Schneidmesser abgetrennt werden. Gemäß einer Weiterbildung der Erfindung ist es jedoch besonders bevorzugt, dass die Materialbahn als Rolle bereitgestellt wird, und die Stützkante als Teilrolle mit einer benötigten Breite von der Materialbahnrolle abgetrennt wird.

Diese Verfahrensweise bringt mehrere Vorteile mit sich. Zunächst kann die Materialbahn platzsparend transportiert und gelagert werden. Darüber hinaus kann auch die abgetrennte Teilrolle platzsparend und rationell an einer Maschine zur Durchführung des erfindungsgemäßen Verfahrens angeordnet werden, beispielsweise auf einem Rollenhalter, und das Stützkantenmaterial kann von der Teilrolle kontinuierlich und in großen Mengen abgerufen werden. Nicht zuletzt besitzt das Bereitstellen der Materialbahn als Rolle den Vorteil, dass derartige Materialbahnrollen beispielsweise in der Papier- und Kartonindustrie in großen Mengen produziert und dort als "Keuls" bezeichnet werden. Daher kann für das erfindungsgemäße Verfahren auf kostengünstige und leicht verfügbare Standardelemente zurückgegriffen werden.

Dabei ist zu beachten, dass das Bereitstellen einer Materialbahn als Rolle und das Abtrennen der Stützkante als Teilrolle mit der benötigten Breite von der Materialbahnrolle in Kombination mit dem Oberbegriff von Anspruch 1 eine eigenständige Zielrichtung im Rahmen der vorliegenden Erfindung darstellt, die nicht notwendigerweise mit dem kennzeichnenden Teil von Anspruch 1 kombiniert werden muss.

Alternativ ist es im Rahmen der vorliegenden Erfindung ebenso möglich, dass die Stützkante von der Materialbahn abgetrennt wird, ohne dass diese zuvor zu einer Rolle aufgerollt wurde. Dabei kann die Stützkante beispielsweise unmittelbar nach Herstellung der Materialbahn von dieser abgetrennt werden, wobei es sich als besonders wirtschaftlich erwiesen hat, wenn die Stützkante ohne Verschnitt oder Zerspanung abgetrennt wird, beispielsweise mittels einer Klinge.

Ferner betrifft die vorliegende Erfindung eine Leichtbauplatte, die unter Einsatz eines Verfahrens nach einem der vorhergehenden Ansprüche bzw. der im vorhergehenden Absatz genannten Zielrichtung hergestellt ist.

### Kurze Beschreibung der Zeichnungen

Fig. 1 zeigt schematisch eine teilweise Schnittansicht einer Leichtbauplatte gemäß der vorliegenden Erfindung;
Fig. 2 zeigt schematisch eine Perspektivansicht einer als Rolle bereitgestellten Materialbahn.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

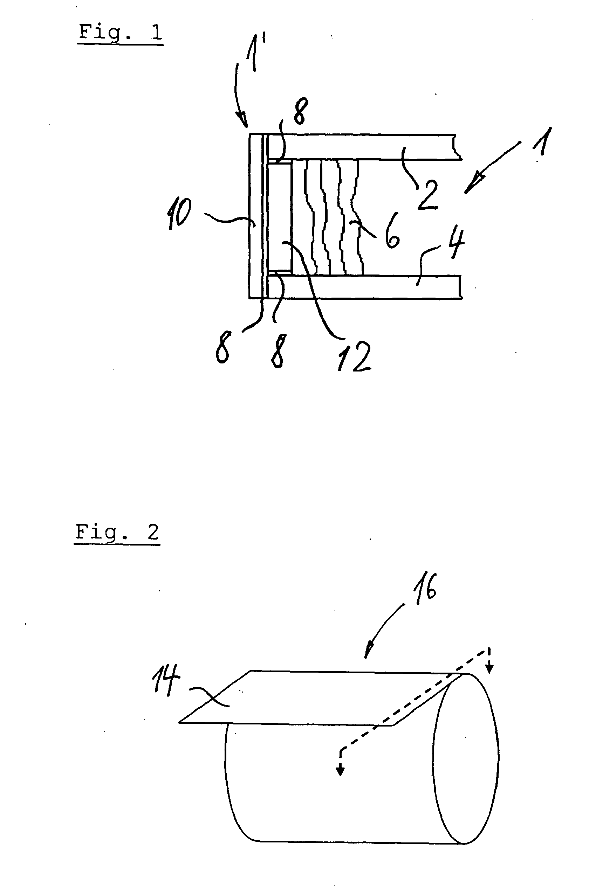

Die in Fig. 1 schematisch gezeigte Leichtbauplatte 1 besitzt in der vorliegenden Ausführungsform eine obere Decklage 2, eine untere Decklage 4 und eine dazwischen angeordnete Kernlage 6 aus leichtem Füllmaterial. Obgleich die vorliegende Erfindung nicht auf bestimmte Materialien beschränkt ist, können die dünnwandigen Decklagen 2, 4 beispielsweise durch eine Spanplatte gebildet sein, während die Kernlage 6 aus leichtem Füllmaterial beispielsweise einen Schaum, ein Papierwabenmaterial oder dergleichen aufweisen kann. Dabei besitzt die Kernlage 6 aus leichtem Füllmaterial in aller Regel eine geringere Dichte (ein geringeres Gewicht pro Volumeneinheit) als die jeweiligen Decklagen 2 und 4.

Im Bereich einer Schmalfläche 1' der Leichtbauplatte 1 sind in der vorliegenden Ausführungsform eine Dekorkante 10 und eine Stützkante 12 mit den Decklagen 2, 4 mittels eines Klebers 8 verleimt.

Die Herstellung der in Fig. 1 gezeigten Leichtbauplatte vollzieht sich allgemein derart, dass zunächst eine Leichtbauplatte 1 mit einem gewünschten Format (gewünschten Abmessungen) bereitgestellt wird, beispielsweise indem die Leichtbauplatte 1 aus einer großformatigen Leichtbauplatte herausgetrennt wird. Anschließend werden die Dekorkante 10 und die Stützkante 12 im Bereich der Schmalfläche 1' der Leichtbauplatte 1 mittels des Klebers 8 angehaftet. Bei diesem Verfahrensschritt sind unterschiedlichste Varianten denkbar, beispielsweise das zum Einbringen der Stützkante 12 in den Bereich zwischen den Decklagen 2, 4 eine Ausnehmung in die Decklagen 2, 4 bzw. die Kernlage 6 eingebracht wird. Darüber hinaus ist es jedoch erfindungsgemäß ebenso möglich und vorteilhaft, die Stützkante 12 ohne Erzeugen einer Ausnehmung in den Bereich zwischen den Decklagen 2, 4 einzuschieben und hierbei gegebenenfalls die Kernlage 6 zu verformen. Hierdurch ergibt sich ein besonders einfacher Verfahrensablauf.

Bei der vorliegenden Ausführungsform besteht die Stützkante 12 aus einem Kartonmaterial, d.h. aus einem cellulosebasierten Fasermaterial mit einem Flächengewicht im Bereich von 100 g/m² bis 1.000 g/m². Es ist jedoch zu beachten, dass die Stützkante im Rahmen der vorliegenden Erfindung neben dem künstlichen Fasermaterial mindestens ein weiteres Material aufweisen und eine sandwichartige Struktur besitzen kann. Dabei kann das mindestens eine weitere Material ebenfalls ein künstliches Fasermaterial oder ein anderes Material wie Kunststoff, Holz oder vielfältige andere Materialien sein.

In der vorliegenden Ausführungsform wird die Stützkante, wie in Fig. 2 veranschaulicht ist, zunächst als Teilrolle mit einer benötigten Breite von einer Materialbahn 14 abgetrennt, die als Rolle 16 bereitgestellt wird. Das Abtrennen der Teilrolle ist in Fig. 2 durch gestrichelte Pfeile veranschaulicht. Dieser Abtrennvorgang kann auf unterschiedlichste Art und Weise erfolgen, beispielsweise mittels einer Klinge, eines Messers aber auch mittels zerspanender oder sonstiger Abtrennvorrichtungen, wie beispielsweise auch Laservorrichtungen etc.

Die abgetrennte Teilrolle kann dann in Rollenform dem oben beschriebenen Verfahren zum Einbringen der Stützkante in den Bereich zwischen den Decklagen 2, 4 zugeführt werden oder in dieser Form auch leicht gelagert und transportiert werden.

## Patentansprüche

1. Verfahren zum Anhaften von Kantenmaterial (10, 12) an Leichtbauplatten (1), die zwei dünnwandige Decklagen (2, 4) und eine zwischen den Decklagen (2, 4) angeordnete Kernlage (6) aus leichtem Füllmaterial aufweisen, mit den Schritten:
Bereitstellen einer Leichtbauplatte (1), einer Dekorkante (10) und einer Stützkante (12), Einbringen der Stützkante (12) zwischen den Decklagen (2,4) in den Bereich einer Schmalfläche (1') der Leichtbauplatte (1),
Einbringen der Dekorkante (10) in den Bereich der Schmalfläche (1') und
Anhaften der Dekorkante (10) und/oder der Stützkante (12) im Bereich der Schmalfläche (1'),
**dadurch gekennzeichnet, dass**
zumindest die Stützkante (12) ein Kartonmaterial aufweist.

2. Verfahren nach Anspruch 1, **dadurch gekennzeichnet, dass** zumindest die Stützkante (12) mit einer benötigten Breite von einer Materialbahn (14) abgetrennt wird.

3. Verfahren nach Anspruch 2, **dadurch gekennzeichnet, dass** die Materialbahn (14) als Rolle (16) bereitgestellt wird und die Stützkante (12) als Teilrolle mit der benötigten Breite von der Materialbahnrolle (16) abgetrennt wird.

4. Verfahren nach Anspruch 2, **dadurch gekennzeichnet, dass** die Stützkante (12) von der Materialbahn (14) abgetrennt wird, ohne dass diese zuvor zu einer Rolle aufgerollt wurde.

5. Verfahren nach einem der vorhergehenden Ansprüche, **dadurch gekennzeichnet, dass** die Stützkante neben dem künstlichen Fasermaterial mindestens ein weiteres Material aufweist und bevorzugt eine sandwichartige Struktur besitzt.

6. Verfahren nach Anspruch 5, **dadurch gekennzeichnet, dass** das mindestens eine weitere Material ebenfalls ein künstliches Fasermaterial oder ein anderes Material ist.

7. Leichtbauplatte (1), die unter Einsatz eines Verfahrens nach einem der vorhergehenden Ansprüche hergestellt ist.

## Claims

1. Process for adhering edging material (10, 12) to lightweight building panels (1) which have two thin-walled cover layers (2, 4) and a core layer (6) made from lightweight filling material arranged between the cover layers (2, 4), having the steps:
provision of a lightweight building panel (1), a decorative edge (10) and a supporting edge (12),
introducing the supporting edge (12) between the cover layers (2, 4) into the region of a narrow surface (1') of the lightweight building panel (1), introducing the decorative edge (10) into the region of the narrow surface (1'), and
adhering the decorative edge (10) and/or the supporting edge (12) in the region of the narrow surface (1'), **characterised in that** at least the supporting edge (12) has a cardboard material.

2. Process according to claim 1, **characterised in that** at least the supporting edge (12) with a required width is separated off from a material web (14).

3. Process according to claim 2, **characterised in that** the material web (14) is provided as a roll (16) and the supporting edge (12) as a part roll with the required width is separated off from the material web roll (16).

4. Process according to claim 2, **characterised in that** the supporting edge (12) is separated off from the material web (14) without it having been rolled up beforehand to form a roll.

5. Process according to one of the preceding claims, **characterised in that** the supporting edge has at least one further material in addition to the artificial fibrous material and preferably has a sandwich-like structure.

6. Process according to claim 5, **characterised in that** the at least one further material is likewise an artificial fibrous material or a further material.

7. Lightweight building panel (1) which is produced using a process according to one of the preceding claims.

## Revendications

1. Procédé de collage de matériau de rebord (10, 12) sur des panneaux de construction légers (1), présentant deux couches de couverture (2, 4) à paroi mince et une couche de noyau (6) en matériau de remplissage léger, disposée entre les couches de couverture (2, 4), comprenant les étapes ci-après :
fourniture d'un panneau de construction léger (1), d'un rebord de décoration (10) et d'un rebord d'appui (12),
insertion du rebord d'appui (12) entre les couches de couverture (2, 4) dans la zone d'une face étroite (1') du panneau de construction léger (1),
insertion du rebord de décoration (10) dans la zone de la face étroite (1'), et
collage du rebord de décoration (10) et/ou du rebord d'appui (12) dans la zone de la face étroite (1'),
**caractérisé en ce qu'**
au moins le rebord d'appui (12) présente un matériau à base de carton.

2. Procédé selon la revendication 1, **caractérisé en ce qu'**au moins le rebord d'appui (12) est découpé, à une largeur nécessaire, à partir d'une bande de matériau (14).

3. Procédé selon la revendication 2, **caractérisé en ce que** la bande de matériau (14) est fournie sous forme de rouleau (16) et le rebord d'appui (12) est découpé en tant que rouleau partiel, à la largeur nécessaire, à partir du rouleau de bande de matériau (16).

4. Procédé selon la revendication 2, **caractérisé en ce que** le rebord d'appui (12) est découpé à partir de la bande de matériau (14), sans que celle-ci ait été préalablement enroulée en un rouleau.

5. Procédé selon l'une des revendications précédentes, **caractérisé en ce que** le rebord d'appui comprend, outre le matériau à base de fibres synthétique, au moins un autre matériau et, de préférence, présente une structure du genre sandwich.

6. Procédé selon la revendication 5, **caractérisé en ce que** au moins un autre matériau est également un matériau à base de fibres synthétique ou un autre matériau.

7. Panneau de construction léger (1), fabriqué en utilisant un procédé selon l'une des revendications précédentes.
